# EUROPÄISCHE PATENTANMELDUNG

(11) **EP 1 911 899 A2**
(43) Veröffentlichungstag der Anmeldung: **16.04.2008**
(21) Anmeldenummer: 07019317.2
(22) Anmeldetag: 02.10.2007
(51) Int. Cl.: E04B 2/06

(54) **Bausystem**

(30) Priorität: 07.10.2006 DE 102006047559
(71) Anmelder: KS-Quadro Verwaltungsgesellschaft mbH, 76448 Durmersheim (DE); REHAU AG + Co, 95111 Rehau (DE)
(72) Erfinder: Sikorski, Michael, 91056 Erlangen (DE); Zapf, Wolfgang, 90571 Schwaig b. Nbg. (DE); de Boer, Cornelius, 26725 Emden (DE)
(74) Vertreter: Maucher, Wolfgang

(57) **Zusammenfassung**

Die Erfindung betrifft ein Bausystem zum Erstellen eines Mauerwerks aus einer Mehrzahl von Mauersteinen, von denen zumindest eine Teilmenge wenigstens ein Durchsteckloch (4) aufweist, derart, dass die Durchstecklöcher (4) aneinander angrenzender Mauersteine (3) einen vertikal oder horizontal orientierten Versorgungskanal (5) zum bedarfsweisen Durchführen einer Versorgungsleitung bilden. Für das erfindungsgemäße Bausystem ist kennzeichnend, dass zum Temperieren des Mauerwerks ein von einem Temperiermedium durchströmbares Rohrregister (6) vorgesehen ist, mit einer Mehrzahl von Temperierrohren (7) welche Temperierrohre (7) über Zulauf- bzw. Ablaufrohre (8, 9) verbunden sind, und dass die Temperierrohre (7) jeweils einen Versorgungskanal (5) des Mauerwerks durchsetzen. Mit Hilfe des erfindungsgemäßen Bausystems lassen sich thermisch aktivierte Wandflächen bilden, wobei die erforderlichen Rohrregister (6) vorzugsweise etwa mittig in der Wandebene sitzen (vgl. Fig. 1).

## Beschreibung

Die Erfindung betrifft ein Bausystem zum Erstellen eines Mauerwerks aus einer Mehrzahl von Mauersteinen, von denen zumindest eine Teilmenge wenigstens ein Durchsteckloch aufweist, derart, dass die Durchstecklöcher aneinander angrenzender Mauersteine einen vertikal oder horizontal orientierten Versorgungskanal zum bedarfsweisen Durchführen einer Versorgungsleitung bilden.

Man hat bereits ein im Handel als "KS-Quadro" bezeichnetes Bausystem geschaffen, das zum Erstellen eines Mauerwerks aus einer Mehrzahl von Mauersteinen bestimmt ist. Die als Kalksandvollsteine ausgestalteten Mauersteine des vorbekannten Bausystems sind als Plansteine ausgestaltet, die an ihren gegenüberliegenden, vertikal orientierten Schmalseiten Profilierungen aufweisen, wobei zum Ausrichten aneinander angrenzender Mauersteine die auf gegenüberliegenden Seiten vorgesehenen Profilierungen komplementär zueinander ausgestaltet sind.

Um durch ein, mit Hilfe des vorbekannten Bausystems erstelltes Mauerwerk eine elektrische Versorgungsleitung hindurchziehen zu können, hat man bereits Mauersteine geschaffen, die mehrere, etwa in der Steinmittelebene angeordnete Durchstecklöcher aufweisen. Dabei werden die Mauersteine bei Erstellen eines Mauerwerks derart übereinander angeordnet, dass ein Teil der Durchstecklöcher eines unteren Mauersteins mit einem Teil der Durchstecklöcher eines darauf aufgelegten oberen Mauersteins derart fluchten, dass die Durchstecklöcher der aneinander angrenzenden und übereinander angeordneten Mauersteine jeweils einen vertikal orientierten Versorgungskanal bilden. Die aus diesen Mauersteinen erstellte Mauerscheibe muss anschließend nur flachseitig im Bereich eines der Versorgungskanäle angebohrt werden, um durch den seitlich angebohrten Versorgungskanal die benötigte elektrische Versorgungsleitung führen zu können.

Das vorbekannte Bausystem erleichtert daher das Erstellen eines Mauerwerks wesentlich. Um aus einem solchen Mauerwerk letztendlich ein Gebäude erstellen zu können, sind jedoch weitere Baumaßnahmen erforderlich.

Um ein Gebäude beheizen zu können, hat man bereits verschiedene Heizsysteme entwickelt. So hat man u.a. auch Flächenheizungen geschaffen, die als Fußboden-, Wand- oder Deckenheizungssysteme ausgestaltet sein können. Dabei werden hersteller- und/oder systemabhängig zusätzliche Konstruktionselemente mit wasserführenden Rohrsystemen an einer Gebäudewand angebracht.

So sind u.a. Nasseinbausysteme bekannt, bei denen die Heizungsrohre mit Hilfe von Klemmschienen, Haltenadeln oder Plattenelementen in vorgeplanten Abständen verlegt und fixiert werden, um die rohrführenden Aussparungen in der Fläche mit einer nass angebrachten Mörtelmasse zu verputzen. Auch kennt man bereits Trockeneinbausysteme, bei denen die Heizungsrohre in herstellerseitig vorgefrästen Aussparungen von Gipskartonplatten eingelegt sind, wobei diese Plattenelemente auf der Baustelle im Trockenbauverfahren montiert werden können, bevor die in den Plattenelementen befindlichen Rohre zu Heizkreisläufen gekoppelt und an die vorhandene Wärme- oder TCälteverteilung anschlossen werden.
Da solche Wandflächenheizungen, die als Nasseinbausysteme oder als Trockeneinbausysteme ausgestaltet sind, in der Putzebene an der wandoberfläche angeordnet sind, besteht die Gefahr, die Heizungsrohre solcher Flächenheizungen unbeabsichtigt anzubohren. Auch ist der Einbau solcher Flächenheizungen mit einem nicht unerheblichen Aufwand verbunden.

Es besteht daher die Aufgabe, ein Bausystem der eingangs erwähnten Art zu schaffen, welches die oben beschriebenen Nachteile vorbekannter Systeme vermeidet und das Erstellen eines Bauwerks mit wesentlich geringerem Aufwand erlaubt.

Die erfindungsgemäße Lösung dieser Aufgabe besteht bei dem Bausystem der eingangs erwähnten Art insbesondere darin, dass zum Temperieren des Mauerwerks ein von einem Temperiermedium durchströmbares Rohrregister vorgesehen ist, mit einer Mehrzahl von Temperierrohren, welche Temperierrohre über Zulauf- bzw. Ablaufrohre verbunden sind, und dass die Temperierrohre jeweils einen Versorgungskanal des Mauerwerks durchsetzen.

Dem erfindungsgemäßen Bausystem ist zumindest ein Rohrregister zugeordnet, das zum Heizen oder Kühlen und somit zum Temperieren des Mauerwerks bestimmt ist. Das Rohrregister, das von einem Temperiermedium und insbesondere von Heiz- oder Kühlwasser durchströmt werden kann, weist eine Mehrzahl von vorzugsweise vertikal oder horizontal orientierten Temperierrohren auf, die - praktisch parallel geschaltet - über horizontal oder vertikal orientierte Zulauf- bzw. Ablaufrohre verbunden sind. Dabei können die Temperierrohre des Rohrregisters in dem durch die einander fluchtenden Durchstecklöcher der aneinander anliegenden Mauersteine gebildeten Versorgungskanäle hindurchgeführt werden. Da das mit Hilfe des erfindungsgemäßen Bausystems erstellte Mauerwerk somit eine Flächenheizung aufweist, sind vergleichsweise geringe vorlauftemperaturen möglich, die auch die Verwendung regenerativer Energiequellen erleichtern. Die vom Rohrregister des erfindungsgemäßen Bausystems erzeugte flächige Strahlungswärme vermag beim Anwender ein Gefühl der Behaglichkeit zu erzeugen. Da das Rohrregister in dem die Wand bildenden Mauerwerk untergebracht ist, werden die Nachteile einer Fußbodenheizung vermieden, die bei venenkranken Anwendern zu einer unerwünschten Erweiterung der Blutgefäße führen kann. Da das Rohrregister tief im Inneren der das Mauerwerk bildenden Mauersteine angeordnet ist, besteht auch nicht die Gefahr, dass das Rohrregister und somit die Flächenheizung des erfindungsgemäßen Bausystems unbeabsichtigt angebohrt wird.

Um auch die als Vor- und Rücklauf benötigten Zulauf- bzw. Ablaufrohre im Mauerwerk unterbringen zu können, sieht eine bevorzugte Ausführungsform gemäß der Erfindung vor, dass eine aus einer Mehrzahl von Mauersteinen erstellte Mauerscheibe an zumindest einer Längs- oder Querseite durch Kimm- oder dergleichen Mauersteine begrenzt ist, die jeweils eine zur Flachseite der Mauerscheibe hin offene Nut oder Aussparung aufweisen, und dass die Nuten oder Aussparungen der in einer Linie angeordneten Kimm- oder Mauersteine ein Zulauf- bzw. Ablaufrohr aufnehmen. Da bei dieser Ausführungsform die für das zulauf- bzw. Ablaufrohr vorgesehene Aussparung zur Flachseite der Mauerscheibe hin offen ausgestaltet ist, können in diesem Kimm- oder dergleichen Mauerstein auch die zum Zulauf- bzw. Ablaufrohr führenden Rohrenden der Temperierrohre sowie die benötigten Verbindungselemente untergebracht werden. Sobald die entsprechenden Verbindungen zwischen dem Zulauf- bzw. Ablaufrohr einerseits sowie den damit verbundenen Temperierrohren andererseits hergestellt ist, kann die Nut oder Aussparung im Kimm- oder dergleichen Mauerstein verputzt werden.

Um auch die Rohrenden der Temperierrohre im Bereich der mit dem Zulauf- bzw. Ablaufrohr verbundenen Verbindungsstelle im Kimm- oder dergleichen Mauerstein unterbringen zu können, ist es zweckmäßig, wenn der die Nut oder Aussparung des Kimm-oder dergleichen Mauersteins begrenzende Nut- oder Aussparungsgrund sich zumindest bis zu den Durchstecklöchern der angrenzenden Mauersteine erstreckt.

Dabei sieht eine bevorzugte Ausführungsform gemäß der Erfindung vor, dass der Nut- oder Aussparungsgrund im Bereich der Durchstecklöcher der angrenzenden Mauersteine jeweils eine, zum Durchführen eines Temperierrohres bestimmte Einsenkung oder dergleichen Aussparung aufweist. Da die im Kimm- oder dergleichen Mauerstein vorgesehenen Aussparungen auf den Bereich des Rohrregisters und seiner Rohre begrenzt ist, vermag der Kimm- oder dergleichen Mauerstein auch ein vergleichsweise schweres Mauerwerk stabil zu tragen.

Die Handhabung des erfindungsgemäßen Bausystems wird begünstigt, wenn die in den Kimm- oder dergleichen Mauersteinen vorgesehenen Aussparungen zu der den angrenzenden Mauersteinen zugewandten Flachseite des Kimm- oder dergleichen Mauersteins hin offen ausgebildet sind.

Besonders vorteilhaft ist es, wenn die Temperierrohre mit den Zulauf- bzw. Ablaufrohren jeweils über ein vorzugsweise als T-Stück oder als Kreuzstück ausgestaltetes Anschlusselement verbunden sind.

Vorteilhaft ist es, wenn die Zulauf- bzw. Ablaufrohre eines Rohrregisters in einem Wandanschlusselement zusammengeführt sind. Die mit dem Rohrregister ausgestattete Wand kann somit vom wandanschlusselement aus über den Rohrboden mit dem Verteiler angeschlossen werden, wobei die gewünschte Temperatur - ähnlich wie bei einer Fußbodenheizung - über einen Raumtemperaturfühler individuell einregelbar ist.

Die rasche Montage des erfindungsgemäßen Bausystems wird noch erleichtert, wenn die für ein Rohrregister vorgesehenen Rohre untereinander und/oder mit den Anschlusselementen bzw. Wandanschlusselementen mittels Klemm- oder Presshülsen verbunden sind.

Um die Wirkungsweise der Flächenheizung noch zu erhöhen, ist es zweckmäßig, wenn die ein Temperierrohr aufnehmenden Versorgungskanäle mit einem wärmeleitenden Material, vorzugsweise mit Quarzsand oder Graphit, verfüllbar sind.

Das Gefühl der Behaglichkeit wird begünstigt und die Akzeptanz beim Anwender wird erhöht, wenn die Mauersteine als Kalksandsteine ausgestaltet sind.

Dabei sieht eine bevorzugte Weiterbildung gemäß der Erfindung vor, dass die Mauersteine als Plansteine ausgebildet sind, dass die Plansteine auf gegenüberliegenden Seiten eine Profilierung aufweisen, und dass zum Ausrichten aneinander angrenzender Plansteine die auf gegenüberliegenden Seiten eines Plansteines vorgesehenen Profilierungen komplementär zueinander ausgestaltet sind. Durch die an gegenüberliegenden Seiten der Plansteine vorgesehenen Profilierungen können die für ein Mauerwerk benötigten Mauersteine derart lagegerecht zueinander angeordnet werden, dass ein Fluchten der einen Versorgungskanal bildenden Durchstecklöcher sichergestellt wird.

Weiterbildungen gemäß der Erfindung sind in weiteren unteransprüchen aufgeführt. Nachstehend wird die Erfindung anhand eines bevorzugten Ausführungsbeispieles noch näher erläutert.

Es zeigt:
- Fig. 1: eine Mauerscheibe im Bereich einer Türöffnung, welche Mauerscheibe aus einem Bausystem zum Erstellen eines Mauerwerks gefertigt wurde,
- Fig. 2: zwei Mauersteine des in Figur 1 veranschaulichten Bausystems in einer auseinander gezogenen Darstellung, wobei ein Mauerstein mehrere Durchstecklöcher hat, welche die Temperierrohre eines Rohrregisters durchsetzen, und
- Fig. 3: die Mauersteine aus Figur 2 in einer aufeinanderliegenden Gebrauchsstellung.

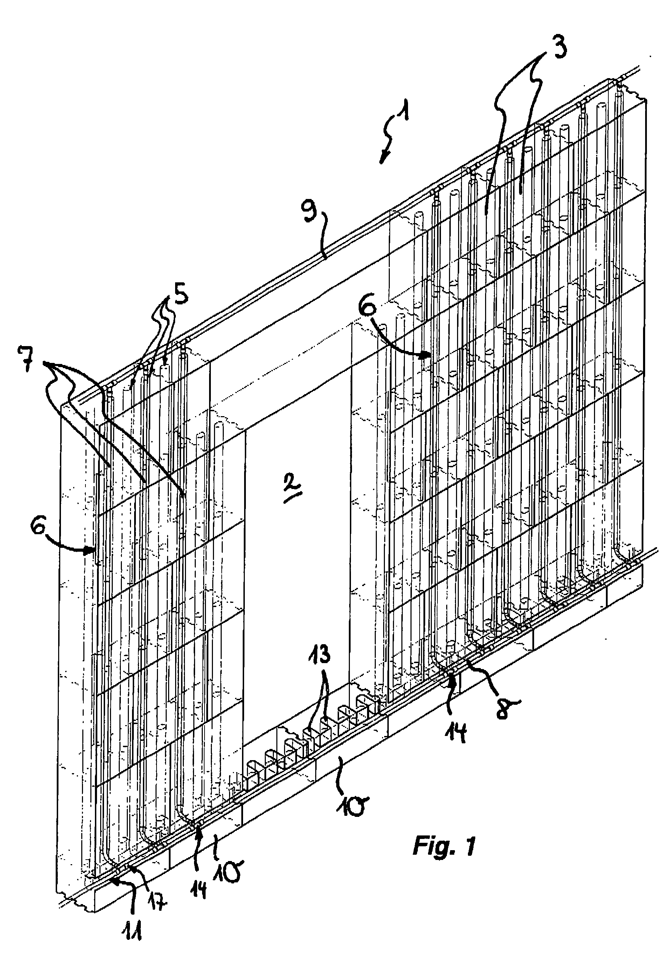

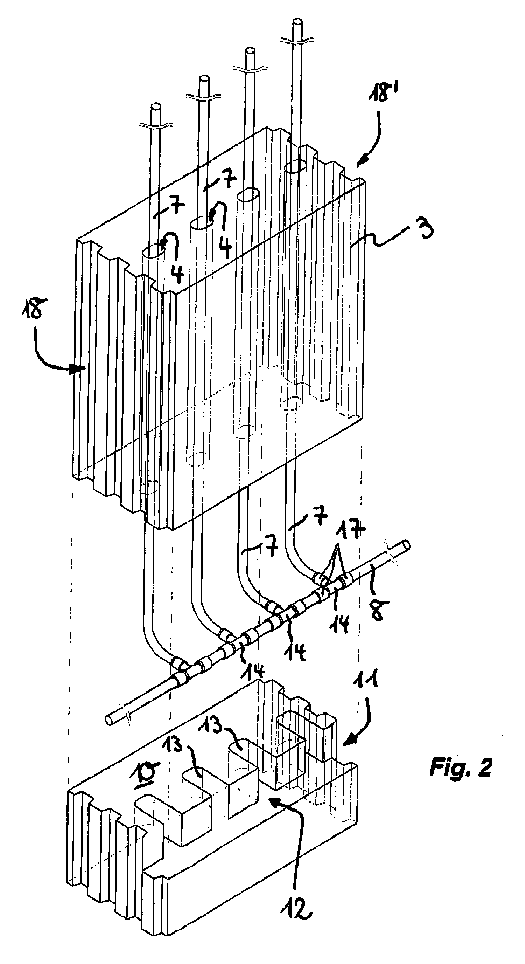

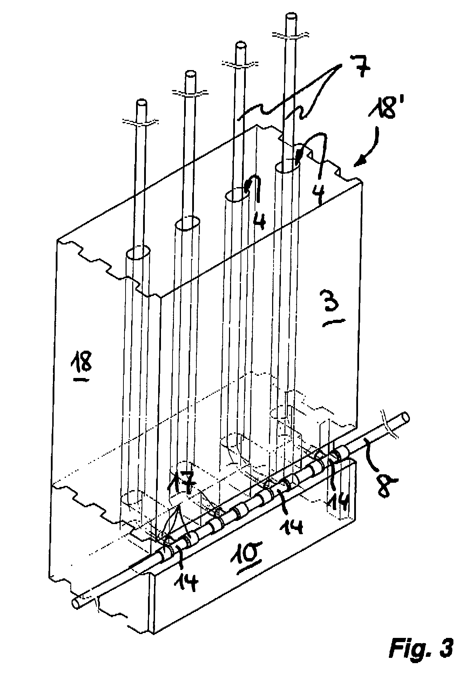

In Figur 1 ist eine Mauerscheibe 1 im Bereich einer Türöffnung 2 dargestellt. Die Mauerscheibe 1 in Figur 1 ist mit Hilfe eines Bausystems hergestellt, das zum Erstellen eines Mauerwerks dient. Das Bausystem hat eine Mehrzahl von Mauersteinen 3, die zum Erstellen des Mauerwerks in üblicher Weise aneinander gereiht und übereinander gestapelt werden. Wie aus den Figuren 2 und 3 deutlich wird, weisen die Mauersteine 3 jeweils mehrere, in einer vertikalen Steinmittelebene angeordnete Durchstecklöcher 4 auf, derart, dass die Durchstecklöcher 4 aneinander angrenzender Mauersteine 3 einen Versorgungskanal 5 zum bedarfsweisen Durchführen einer versorgungsleitung bilden.

In den Figuren 1 bis 3 ist erkennbar, dass zum Temperieren des Mauerwerks und letztendlich zum Kühlen oder Heizen des vom Mauerwerk umschlossenen Bauwerks ein Rohrregister 6 vorgesehen ist, das von einem Temperiermedium und insbesondere von Heiz- oder Kühlwasser durchströmbar ist. Das Rohrregister 6 weist eine Mehrzahl von Temperierrohren 7 auf, die über Zulauf- bzw. Ablaufrohre 8, 9 verbunden sind. Während die Temperierrohre 7 jeweils einen Versorgungskanal 5 durchsetzen, sind die Zulauf- bzw. Ablaufrohre 8, 9 in einem Kimm- oder dergleichen Mauerstein 10 vorgesehen. Diese Kimm- oder Mauersteine 10 begrenzen die aus den Mauersteinen 3 erstellte Mauerscheibe 1 bodenseitig und weisen eine Nut oder Aussparung 11 auf, die das Zu- bzw. Ablaufrohr 8, 9 aufnimmt. Dabei erstreckt sich der die Nut oder Aussparung 11 des Kimsteins 10 begrenzende Nut- oder Aussparungsgrund 12 zumindest bis zu dem in der Steinmittelebene des benachbarten Mauersteins 3 angeordneten Durchstecklöcher 4.

Im Bereich dieser Durchstecklöcher 4 weist der Nut- oder Aussparungsgrund 12 jeweils eine, zur Durchführung eines Temperierrohres 7 bestimmte Einsenkung oder dergleichen Aussparung 13 auf. Während das Zulauf- bzw. Ablaufrohr 8, 9 durch die Nut oder dergleichen Aussparung 11 hindurchgeführt ist, findet das benachbarte Rohrende der Temperierrohre 7 sowie gegebenenfalls ein zum Verbinden erforderliches Verbindungselement 14 in der Einsenkung oder dergleichen Aussparung 13 Platz. Der Nutgrund 12 der Aussparung 11 ist dementsprechend gezahnt ausgebildet.

Wie aus Figur 2 erkennbar ist, sind die in dem Kimstein 10 vorgesehenen Aussparungen 11, 13 zu der den angrenzenden Mauersteinen 3 zugewandten Flachseite des Kimsteines hin offen ausgebildet. Nach dem Erstellen der Mauerscheibe 1 können die noch verbleibenden Aussparungen 11, 13 mit den darin befindlichen Teilen des Rohrregisters 6 verputzt werden.

In den Figuren 1 bis 3 ist erkennbar, dass die Temperierrohre 7 mit den Zulauf- bzw. Ablaufrohren 8, 9 jeweils über ein als T-Stück ausgestaltetes Anschlusselement 14 verbunden sind. Die Zulauf- bzw. Ablaufrohre 8, 9 des Rohrregisters 6 sind in einem Wandanschlusselement 16 zusammengeführt, das über beispielsweise im Estrich geführte Rohrleitungen mit der Heizquelle verbunden sein kann. In den Figuren 1 bis 3 ist angedeutet, dass die für das Rohrregister 6 vorgesehenen Rohre 7, 8, 9 mit den Anschlusselementen 15, 16 mittels Klemm- oder Presshülsen 17 verbunden sind.

Um die vom Rohrregister 6 ausgestrahlte Wärme gut in den Wandscheibe 1 und den von ihr umgrenzten Raum einbringen zu können ist es vorteilhaft, wenn die die Temperierrohre 7 aufnehmenden Versorgungskanäle 5 mit einem wärmeleitendem Material und vorzugsweise mit Quarzsand oder mit Graphit verfüllt sind.

Die Mauersteine 3, 10 sind hier als Kalksandvollsteine ausgestaltet. Dabei sind die Mauersteine 3, 10 als Plansteine ausgebildet, die auf ihren gegenüberliegenden und in vertikaler Richtung orientierten Schmalseiten eine aus Vorsprüngen und Vertiefungen gebildete Profilierung 18, 18' aufweisen. Zum Ausrichten der aneinander angrenzenden Plansteine 3 bzw. 10 sind die auf gegenüberliegenden Seiten dieser Plansteine 3, 10 vorgesehenen Profilierungen 18, 18' komplementär zueinander ausgestaltet. Durch diese Profilierungen 18, 18' ist gewährleistet, dass die Plansteine 3, 10 so zueinander ausgerichtet werden können, dass sich eine plane Wandebene ergibt und die in den Mauersteinen 3 vorgesehenen Durchstecklöcher 4 miteinander zu den Versorgungskanälen 5 fluchten.

## Patentansprüche

1. Bausystem zum Erstellen eines Mauerwerks aus einer Mehrzahl von Mauersteinen, von denen zumindest eine Teilmenge wenigstens ein Durchsteckloch (4) aufweist, derart, dass die Durchstecklöcher (4) aneinander angrenzender Mauersteine (3) einen vertikal oder horizontal orientierten Versorgungskanal (5) zum bedarfsweisen Durchführen einer Versorgungsleitung bilden, **dadurch gekennzeichnet, dass** zum Temperieren des Mauerwerks ein von einem Temperiermedium durchströmbares Rohrregister (6) vorgesehen ist, mit einer Mehrzahl von Temperierrohren (7) welche Temperierrohre (7) über Zulauf- bzw. Ablaufrohre (8, 9) verbunden sind, und dass die Temperierrohre (7) jeweils einen Versorgungskanal (5) des Mauerwerks durchsetzen.

2. Bausystem nach Anspruch 1, **dadurch gekennzeichnet, dass** eine aus einer Mehrzahl von Mauersteinen (3) erstellte Mauerscheibe (1) an zumindest einer Längs- oder Querseite durch Kimm- oder dergleichen Mauersteine (10) begrenzt ist, die (10) jeweils eine zur Flachseite der Mauerscheibe (1) hin offene Nut oder Aussparung (11) aufweisen, und dass die Nuten oder Aussparungen (11) der in einer Linie angeordneten Kimm- oder dergleichen Mauersteine (10) ein Zulauf- bzw. Ablaufrohr (8, 9) aufnehmen.

3. Bausystem nach Anspruch 1 oder 2, **dadurch gekennzeichnet, dass** der die Nut oder Aussparung (11) des Kimm-oder dergleichen Mauersteins (10) begrenzende Nut- oder Aussparungsgrund (12) sich zumindest bis zu den Durchstecklöchern (4) der angrenzenden Mauersteine (3) erstreckt.

4. Bausystem nach einem der Ansprüche 1 bis 3, **dadurch gekennzeichnet, dass** der Nut- oder Aussparungsgrund (12) im Bereich der Durchstecklöcher (4) der angrenzenden Mauersteine (3) jeweils eine, zum Durchführen eines Temperierrohre (7) bestimmte Einsenkung oder dergleichen Aussparung (13) aufweist.

5. Bausystem nach einem der Ansprüche 1 bis 4, **dadurch gekennzeichnet, dass** die in den Kimm- oder dergleichen Mauersteinen (10) vorgesehenen Aussparungen (11, 13) zu der den angrenzenden Mauersteinen (3) zugewandten Flachseiten des Kimm- oder Mauersteines (10) hin offen ausgebildet sind.

6. Bausystem nach einem der Ansprüche 1 bis 5, **dadurch gekennzeichnet, dass** die Temperierrohre (7) mit den Zulauf- bzw. Ablaufrohren (8, 9) jeweils über ein vorzugsweise als T-Stück ausgestaltetes Anschlusselement (15) verbunden sind.

7. Bausystem nach einem der Ansprüche 1 bis 6, **dadurch gekennzeichnet, dass** die Zulauf- bzw. Ablaufrohre (8, 9) eines Rohrregisters (6) in einem Wandanschlusselement (16) zusammengeführt sind.

8. Bausystem nach einem der Ansprüche 1 bis 7, **dadurch gekennzeichnet, dass** die für ein Rohrregister (6) vorgesehenen Rohre (7, 8, 9) untereinander und/oder mit den Anschlusselementen (15) bzw. Wandanschlusselementen (16) mittels Klemm- oder Presshülsen (17) verbunden sind.

9. Bausystem nach einem der Ansprüche 1 bis 8, **dadurch gekennzeichnet, dass** die ein Temperierrohr (7) aufnehmenden Versorgungskanäle (5) mit einem wärmeleitendem Material, vorzugsweise mit Quarzsand oder Graphit, verfüllbar sind.

10. Bausystem nach einem der Ansprüche 1 bis 9, **dadurch gekennzeichnet, dass** die Mauersteine (3, 10) als Kalksandsteine ausgestaltet sind.

11. Bausystem nach einem der Ansprüche 1 bis 10, **dadurch gekennzeichnet, dass** die Mauersteine (3, 10) als Plansteine ausgebildet sind, dass die Plansteine auf gegenüberliegenden Seiten eine Profilierung (18, 18') aufweisen, und dass zum Ausrichten aneinander angrenzender Plansteine (3, 10) die auf gegenüberliegenden Seiten eines Plansteines (3, 10) vorgesehenen Profilierungen (18, 18') komplementär zueinander ausgestaltet sind.
